# EUROPEAN PATENT APPLICATION

(11) **EP 4 428 268 A1**
(43) Date of publication of application: **11.09.2024**
(21) Application number: 22889993.6
(22) Date of filing: 02.11.2022
(51) Int. Cl.: C25B 11/083, B32B 9/00, C01B 32/25, C25B 1/23, C25B 1/55, C25B 9/00, C25B 11/065, C25B 11/087

(54) **DIAMOND LAMINATE**

(30) Priority: 05.11.2021 US 202163276348 P; 16.11.2021 JP 2021186365
(71) Applicant: Daicel Corporation, Osaka-shi, Osaka 530-0011 (JP); National University Corporation Kanazawa University, Ishikawa 920-1192 (JP)
(72) Inventor: TOKUDA, Norio, Kanazawa-shi, Ishikawa 920-1192 (JP); YAMASAKI, Satoshi, Kanazawa-shi, Ishikawa 920-1192 (JP); ASAKAWA, Hitoshi, Kanazawa-shi, Ishikawa 920-1192 (JP); MATSUMOTO, Tsubasa, Kanazawa-shi, Ishikawa 920-1192 (JP); NAGAMATSU, Shinji, Tokyo 108-8230 (JP); NAKANO, Tatsuya, Tokyo 108-8230 (JP); YOSHIKAWA, Taro, Tokyo 108-8230 (JP)
(74) Representative: Grünecker Patent- und Rechtsanwälte PartG mbB
(86) International application number: PCT/JP2022/041066
(87) International publication number: WO 2023/080173

(57) **Abstract**

Provided is a diamond laminate that exhibits an excellent electron emission capability and can form an electrode reaction field with an excellent reducing property. The laminate of the present disclosure includes an electron excitation layer (1) having a diamond crystal structure in which some carbon atoms are substituted with nitrogen atoms, and a conductive layer (2) having a diamond crystal structure in which some carbon atoms are substituted with boron atoms. The nitrogen atom concentration in the layer (1) is preferably 5 × 10¹⁸ atoms/cm³ or greater, and the boron atom concentration in the layer (2) is preferably 1 × 10¹⁹ atoms/cm³ or greater. The thickness of the layer (1) is preferably from 1 nm to 100 µm, and the thickness of the layer (2) is preferably 1 µm or greater.

## Description

### Technical Field

The present disclosure relates to a novel diamond laminate and a method for producing the diamond laminate, and also relates to an electrode and an electrolytic reaction apparatus in which the diamond laminate is used, and to a method for producing carbon monoxide from carbon dioxide using the diamond laminate. The present disclosure claims the priority to US 63/276,348 provisionally filed in the United States on November 5, 2021 and JP 2021-186365 filed in Japan on November 16, 2021, the contents of which are incorporated herein by reference.

### Background Art

Among carbon recycling techniques for converting CO₂ contained in exhaust gas or the like into a useful chemical product, a technique for electrolytic reduction of CO₂ is expected to have suppressed hydrogen generation, increased conversion efficiency of CO₂, and increased product selectivity. CO, which is one of the reduction products of CO₂, is particularly useful in that it is easy to handle because it is a gas, and it can be used in various applications.

Patent Document 1 describes an invention in which CO₂ is reduced to produce CO through an electrochemical reaction using a reduction electrode provided with a catalyst layer that carries a precious metal such as Au, Ag, or Pt. However, this method is problematic in that precious metals are generally expensive, and the reaction (CO₂ reduction reaction) in which CO₂ is reduced to CO competes with a reaction (H₂O reduction reaction) in which water is reduced to hydrogen, and therefore the production efficiency of CO is low.

Patent Document 2 indicates that in an electrochemical reaction using a reduction electrode containing a boron-doped diamond, irradiation with deep ultraviolet light excites electrons in the boron-doped diamond, and further application of a voltage causes a CO₂ reduction reaction to efficiently proceed.

Since the abovementioned boron-doped diamond has a wide potential window, the CO₂ reduction reaction can proceed while the hydrogen reduction reaction is suppressed. However, as described above, voltage application and irradiation with ultraviolet light are required to cause the CO₂ reduction reaction to proceed, and thus a demand has existed for a technique to efficiently reduce CO₂ and produce CO using less energy.

### Citation List

### Patent Document

Patent Document 1: JP 2020-132965 A
Patent Document 2: JP 2017-100901 A

### Summary of Invention

### Technical Problem

Therefore, an object of the present disclosure is to provide a diamond laminate that exhibits an excellent electron emission capability and can form an electrode reaction field with an excellent reducing property.

Another object of the present disclosure is to provide a method for producing the diamond laminate.

Another object of the present disclosure is to provide an electrode in which the diamond laminate is used.

Another object of the present disclosure is to provide an electrolytic reaction apparatus in which the diamond laminate is used.

Another object of the present disclosure is to provide a method for producing carbon monoxide from carbon dioxide through an electrolytic reduction reaction in which the diamond laminate is used.

### Solution to Problem

As a result of diligent research to solve the problems described above, the present inventors discovered the following. Namely,
1. In a nitrogen-containing diamond crystal structure, a donor level is formed at a position near the conduction band in a bandgap of the diamond by nitrogen atoms contained therein, and therefore the nitrogen-containing diamond crystal structure, when irradiated with visible light, easily transitions to an excited state and emits electrons.
2. A boron-doped diamond crystal structure exhibits excellent conductivity.
3. A laminate of the nitrogen-containing diamond crystal structure and the boron-doped diamond crystal structure forms a reaction field that is rich in a reducing property, and therefore such a laminate is useful as an electrode material.
4. When an electrochemical reaction is carried out using this laminate as a reduction electrode, a reduction reaction for producing CO from CO₂ is selectively promoted, and CO can be efficiently produced.

The present disclosure was completed on the basis of these findings.

That is, the present disclosure provides a laminate including:
an electron excitation layer (1) having a diamond crystal structure in which some carbon atoms are substituted with nitrogen atoms; and
a conductive layer (2) having a diamond crystal structure in which some carbon atoms are substituted with boron atoms.

The present disclosure also provides the laminate, wherein the nitrogen atom concentration in the layer (1) is 5 × 10¹⁸ atoms/cm³ or greater, and the boron atom concentration in the layer (2) is 1 × 10¹⁹ atoms/cm³ or greater.

The present disclosure also provides the laminate, wherein the thickness of the layer (1) is from 1 nm to 100 µm, and the thickness of the layer (2) is 1 µm or greater.

The present disclosure also provides a method for producing a laminate, the method including laminating an electron excitation layer (1) having a diamond crystal structure in which some carbon atoms are substituted with nitrogen atoms, and a conductive layer (2) having a diamond crystal structure in which some carbon atoms are substituted with boron atoms, to obtain the laminate.

The present disclosure also provides an electrode including the laminate.

The present disclosure also provides the electrode, wherein the electrode is a visible light-responsive reduction electrode.

The present disclosure also provides an electrolytic reaction apparatus provided with the electrode.

The present disclosure also provides a method for producing carbon monoxide, the method including reducing, under irradiation with visible light, carbon dioxide on the electrode to obtain carbon monoxide.

### Advantageous Effects of Invention

Since the diamond laminate of the present invention has a high total reduction current density (or since the total reduction current density is high and the Faradaic efficiency for CO production is excellent), the diamond laminate, when irradiated with visible light, easily emits electrons and forms a reaction field that exhibits an excellent reducing property. Therefore, in the photo-electrochemical field, the diamond laminate is suitable as a material for a low environmental load-type reduction electrode that uses sunlight as the energy required for a reduction reaction, or as a material for a visible light-responsive reduction electrode.

### Brief Description of Drawings

FIG. 1 is a graph showing the results of an analysis of the concentrations of boron atoms and nitrogen atoms in a laminate obtained in Example 1.
FIG. 2 is a schematic view of an H-type cell used for evaluating the CO production efficiency of a diamond electrode through CO₂ reduction.
FIG. 3 is a graph showing measurement results of electron emission currents of diamond electrodes obtained in Example 1 and Comparative Example 1.
FIG. 4 is a graph showing the results of an analysis of the concentrations of boron atoms, nitrogen atoms, and silicon atoms in the laminate obtained in Example 1.
FIG. 5 is a graph showing the results of an analysis of the concentrations of boron atoms, nitrogen atoms, and silicon atoms in a laminate obtained in Example 3.

### Description of Embodiments

### Laminate

A laminate according to an embodiment of the present disclosure includes an electron excitation layer (1) (NDD) having a diamond crystal structure in which some carbon atoms are substituted with nitrogen atoms, and a conductive layer (2) (BDD) having a diamond crystal structure in which some carbon atoms are substituted with boron atoms.

The laminate has a thickness of, for example, 1001 nm or greater, preferably 1010 nm or greater, and particularly preferably 1050 nm or greater. The upper limit of the thickness is, for example, 1 mm and preferably 500 µm.

The laminate can emit electrons when irradiated with visible light. This electron emission capability (a value of electron emission current emitted per unit area during operation (for example, at a collector voltage of 100 V)) of the laminate is measured by a method described in the examples and is, for example, 10 pA/cm² or greater, and preferably 100 pA/cm² or greater. Therefore, the laminate can be suitably used for a low environmental load-type electrode (preferably, a reduction electrode) that can use sunlight as the energy source necessary for a reduction reaction.

### Electron Excitation Layer (1)

The electron excitation layer (1) is a layer having a diamond crystal structure in which some of the carbon atoms are substituted with nitrogen atoms.

The electron excitation layer (1) contains carbon atoms and also nitrogen atoms as atoms other than the carbon atoms (that is, as heteroatoms).

The nitrogen atom concentration of the layer (1) is, for example, 5 × 10¹⁸ atoms/cm³ or greater, preferably 1 × 10¹⁹ atoms/cm³ or greater, particularly preferably 5 × 10¹⁹ atoms/cm³ or greater, and especially preferably 1 × 10²⁰ atoms/cm³ or greater. The upper limit of the nitrogen atom concentration is, for example, 5 × 10²² atoms/cm³, preferably 1 × 10²² atoms/cm³ or less, particularly preferably 5 × 10²¹ atoms/cm³ or less, and most preferably 4 × 10²¹ atoms/cm³ or less. Since the layer (1) contains nitrogen atoms in the above range, the layer (1) has visible light responsiveness, and when the layer (1) is irradiated with visible light, electrons are easily transitioned to an excited state and emitted. When the nitrogen atom concentration is less than the above range, the electron emission capability tends to be insufficient. On the other hand, when the nitrogen atom concentration exceeds the above range, the diamond crystal structure is likely to collapse, and the electron emission performance tends to decrease.

The layer (1) has a thickness of, for example, from 1 nm to 100 µm. From the viewpoint of exhibiting sufficient electron emission capability, the lower limit of the thicknesses of the layer (1) is preferably 3 nm or greater, more preferably 5 nm or greater, even more preferably 10 nm or greater, yet even more preferably 15 nm or greater, still even more preferably 30 nm or greater, even further preferably 40 nm or greater, particularly preferably 45 nm or greater, most preferably 50 nm or greater, and especially preferably 60 nm or greater. From the viewpoint of suppressing electrical resistance, the upper limit of the thickness is preferably 10 µm, particularly preferably 1 µm, and most preferably 100 nm. When the thickness of the layer (1) is less than the above range, the usage efficiency of visible light for electron excitation decreases, and the electron emission capability tends to become insufficient. On the other hand, when the thickness of the layer (1) exceeds the above range, the amount of electron excitation through visible light irradiation becomes saturated, and the electrical resistance increases, and therefore the reducing property tends to decrease.

The concentration of nitrogen atoms in the layer (1) may be uniform or may be inclined from the surface portion towards the bottom portion. In the layer (1), when the nitrogen atom concentration increases from the bottom portion towards the surface layer portion, the electron emission capability tends to be further improved. The surface portion of the layer (1) is a portion near the surface of the layer (1) on the side opposite the side bonded to the conductive layer (2), and is, for example, a portion from the surface (depth of 0) to a depth of 60 nm (preferably 40 nm, and particularly preferably 20 nm).

The nitrogen atom concentration of the surface layer portion of the layer (1) is, for example, 1 × 10¹⁹ atoms/cm³ or greater, preferably 5 × 10¹⁹ atoms/cm³ or greater, more preferably 1 × 10²⁰ atoms/cm³ or greater, even more preferably 2 × 10²⁰ atoms/cm³ or greater, particularly preferably 3 × 10²⁰ atoms/cm³ or greater, and most preferably 4 × 10²⁰ atoms/cm³ or greater. The upper limit of the nitrogen atom concentration is, for example, 5 × 10²² atoms/cm³, preferably 1 × 10²¹ atoms/cm³, and more preferably 5 × 10²¹ atoms/cm³.

The layer (1) may contain heteroatoms other than the nitrogen atom, and for example, may contain boron atoms.

When the layer (1) contains boron atoms, the concentration of the boron atoms is, for example, 1 × 10¹³ atoms/cm³ or greater, preferably 1 × 10¹⁴ atoms/cm³ or greater, more preferably 1 × 10¹⁵ atoms/cm³ or greater, even more preferably 1 × 10¹⁶ atoms/cm³ or greater, yet even more preferably 1 × 10¹⁷ atoms/cm³ or greater, still even more preferably 1 × 10¹⁸ atoms/cm³ or greater, even further preferably 1 × 10¹⁹ atoms/cm³ or greater, yet even further preferably 5 × 10¹⁹ atoms/cm³ or greater, particularly preferably 3 × 10²⁰ atoms/cm³ or greater, most preferably 5 × 10²⁰ atoms/cm³ or greater, and especially preferably 1 × 10²¹ atoms/cm³ or greater. The upper limit of the boron atom concentration is, for example, 5 × 10²² atoms/cm³, preferably 3 × 10²² atoms/cm³, and particularly preferably 1 × 10²² atoms/cm³.

The layer (1) may further contain other heteroatoms in addition to boron atoms and nitrogen atoms, and the concentration of the other heteroatoms is, for example, preferably 5 × 10²¹ atoms/cm³ or less from the viewpoint of having a high electron emission capability, and is more preferably 5 × 10²⁰ atoms/cm³ or less, even more preferably 5 × 10¹⁹ atoms/cm³ or less, yet even more preferably 5 × 10¹⁸ atoms/cm³ or less, particularly preferably 1 × 10¹⁸ atoms/cm³ or less, most preferably 1 × 10¹⁷ atoms/cm³ or less, and especially preferably 1 × 10¹⁶ atoms/cm³ or less.

The heteroatom content (nitrogen atom content and boron atom content) in the layer and the thickness of the layer are determined by secondary ion mass spectrometry (SIMS) or the like.

Further, the surface layer portion of the layer (1) is preferably hydrogen-terminated. By hydrogen-terminating the surface layer portion, negative electron affinity increases and electrons are easily released.

### Conductive Layer (2)

The conductive layer (2) is a layer having a diamond crystal structure in which some of the carbon atoms are substituted with boron atoms.

The conductive layer (2) contains carbon atoms and also boron atoms as heteroatoms.

The boron atom concentration in the layer (2) is, for example, 1 × 10¹⁹ atoms/cm³ or greater, preferably 5 × 10¹⁹ atoms/cm³ or greater, particularly preferably 3 × 10²⁰ atoms/cm³ or greater, and especially preferably 1 × 10²¹ atoms/cm³ or greater. The upper limit of the boron atom concentration is, for example, 5 × 10²² atoms/cm³, preferably 3 × 10²² atoms/cm³, particularly preferably 1 × 10²² atoms/cm³, most preferably 5 × 10²¹ atoms/cm³ or less, and especially preferably 3 × 10²¹ atoms/cm³ or less. Since the layer (2) contains boron atoms in the above range, the layer (2) has excellent conductivity. When the boron atom concentration is less than the above range, the conductivity tends to become insufficient. On the other hand, when the boron atom concentration exceeds the above range, the diamond crystal structure tends to easily collapse.

The layer (2) may contain heteroatoms other than boron atoms, but the concentration of the heteroatoms other than boron atoms is, for example, preferably 5 × 10²¹ atoms/cm³ or less from the viewpoint of providing high conductivity, and is more preferably 5 × 10²⁰ atoms/cm³ or less, even more preferably 5 × 10¹⁹ atoms/cm³ or less, further preferably 1 × 10¹⁹ atoms/cm³ or less, particularly preferably 1 × 10¹⁸ atoms/cm³ or less, most preferably 1 × 10¹⁷ atoms/cm³ or less, and especially preferably 1 × 10¹⁶ atoms/cm³ or less.

The layer (2) is not required to contain nitrogen atoms, and the nitrogen atom concentration may be, for example, 5 × 10²⁰ atoms/cm³ or less, preferably 1 × 10²⁰ atoms/cm³ or less, more preferably 1 × 10¹⁹ atoms/cm³ or less, even more preferably less than 5 × 10¹⁸ atoms/cm³, preferably 1 × 10¹⁸ atoms/cm³ or less, and particularly preferably 1 × 10¹⁷ atoms/cm³ or less. The lower limit of the nitrogen atom concentration is, for example, 1 × 10¹⁶ atoms/cm³.

The thickness of the layer (2) (the total thickness when the layer (2) is formed from a plurality of layers) is not particularly limited, and is, for example, 1 µm or greater, preferably 50 µm or greater, and particularly preferably 100 µm or greater. When the thickness of the layer (2) is 100 µm or greater, the layer (2) has sufficient strength to be a self-supporting film and is easy to handle, and thus such a thickness is preferable. The upper limit of the thickness is, for example, 1 mm, and from the viewpoint of suppressing an increase in the electrical resistance value, the upper limit is preferably 500 µm, and particularly preferably 300 µm.

### Other Components

The layer (1) and the layer (2) may be constituted by only the diamond crystal structure in which some of the carbon atoms are substituted with heteroatoms, or may contain another component in addition to the diamond crystal structure. Examples of the other component include a silicon compound (such as silicon carbide).

In a case in which the layer (1) or the layer (2) contains the other component (such as a silicon compound), the position at which the other component is contained is not particularly limited, and for example, the other component may be contained in, among the surface layer portion of the layer, a portion from the surface (depth of 0) to a depth of 1000 nm (preferably 150 nm, particularly preferably 20 nm).

In the layer (1) or the layer (2) (for example, a portion from the surface (depth of 0) of the layer (1) or the layer (2) to a depth of 1000 nm (preferably 150 nm, particularly preferably 20 nm)), the content of the other component (such as a silicon compound) is, for example, 10 wt.% or less (for example, from 10 to 0.1 wt.%).

### Other Layers

The laminate according to an embodiment of the present disclosure may include another configuration in addition to the layers (1) and (2).

The proportion of the total of the layers (1) and (2) in the total amount (100 wt.%) of the laminate according to an embodiment of the present disclosure is, for example, 60 wt.% or greater, preferably 70 wt.% or greater, more preferably 80 wt.% or greater, particularly preferably 90 wt.% or greater, and most preferably 95 wt.% or greater, in relation to the total amount of the laminate. Note that the upper limit is 100 wt.%. That is, the laminate may be configured by only the layer (1) and the layer (2).

### Production Method of Laminate

The laminate described above can be produced by laminating an electron excitation layer (1) having a diamond crystal structure in which some carbon atoms are substituted with nitrogen atoms, and a conductive layer (2) having a diamond crystal structure in which some carbon atoms are substituted with boron atoms.

The method for producing the laminate includes a production method through the following steps.
Step 1: fixing nitrogen-containing diamond particles on a substrate
Step 2: forming, through a vapor phase growth method, a boron-doped diamond crystal structure on the substrate with the particles fixed thereon

The following steps may also be provided after Step 2.
Step 3: removing the substrate
Step 4: subjecting a surface exposed by removing the substrate to a hydrogenation treatment

### Step 1

Step 1 is a step of fixing nitrogen-containing diamond particles on a substrate.

Note that in the present disclosure, "nitrogen-containing diamond particles" are diamond particles containing nitrogen atoms, and the site at which a nitrogen atom is contained is not limited. The diamond particles are configured from a core part formed from sp3 carbons and a shell part formed from sp2 carbons, and the nitrogen atom may be contained in the core part or in the shell part. Further, the nitrogen atom may be contained in the boundary between the core part and the shell part.

The method for fixing the nitrogen-containing diamond particles on the substrate is not particularly limited, and examples thereof include a method in which a paint containing nitrogen-containing diamond particles is applied onto the substrate and dried to fix the nitrogen-containing diamond particles on the substrate.

The substrate is not particularly limited, and examples thereof include a silicon substrate, a quartz substrate, a ceramic substrate, a glass substrate, a metal substrate (e.g., an aluminum substrate, a copper substrate, an iron substrate, a stainless steel substrate, and a brass substrate), and a plastic substrate (e.g., a polyimide substrate and a polyamide substrate). Among these, a silicon substrate is preferable in that it excels in heat resistance, mass productivity, thermal shock resistance, and the like.

The surface of the substrate may be subjected to ultrasonic cleaning with acetone, ethanol, pure water, or the like. Further, the surface of the substrate may also be subjected to an acid wash or the like with hydrochloric acid, hydrofluoric acid, or the like. In addition, fine unevenness may be formed on the surface of the substrate.

The shape of the nitrogen-containing diamond particles is not particularly limited, and examples thereof include a spherical shape (e.g., a true spherical shape, a substantially true spherical shape, and an elliptically spherical shape), a polyhedral shape, a rod shape (e.g., a cylindrical shape, a prismatic shape), a flat plate shape, a flaky shape, and an irregular shape.

The nitrogen-containing diamond particles have an average particle size of, for example, from 1 nm to 100 µm. If the average particle size is less than the above range, the nitrogen-containing diamond particles are removed together with the substrate when the substrate is removed in Step 2, and this may make it difficult to form the electron excitation layer (1). On the other hand, when the average particle size exceeds the above range, the electron excitation layer (1) tends to become thick, the electrical resistance increases, and the reducing property tends to decrease. Note that the average particle size is the median diameter (d50) obtained by a laser diffraction/scattering method.

The nitrogen-containing diamond particles are obtained, for example, by a method of adding a nitrogen source to a raw material when producing nanodiamond particles by a detonation method or the like, a method of obtaining a grown film containing nitrogen-doped diamonds obtained by a CVD method and pulverizing the obtained grown film, and a method of doping nitrogen atoms into undoped nanodiamond particles through an ion implantation method.

The paint contains a solvent along with the nitrogen-containing diamond particles. Examples of the solvent include water; alcohols such as ethanol and propanol; hydrocarbons such as toluene; cyclic ethers such as tetrahydrofuran; and ketones such as methyl isobutyl ketone. Of these, one type of solvent may be used alone, or two or more types thereof may be used in combination. Among these, water and/or alcohols are preferable in terms of exhibiting excellent dispersibility of the nitrogen-containing nanodiamond particles.

The paint may further contain a thickener, a dispersant, a buffering agent, and the like.

The content of the nitrogen-containing diamond particles in the paint is, for example, from 0.001 to 5.0 wt.%, and preferably from 0.1 to 1.0 wt.%.

The method for applying the paint is not particularly limited, and the paint can be applied through, for example, a printing method or a coating method. Specific examples include a screen printing method, a mask printing method, an offset printing method, an inkjet printing method, a flexographic printing method, a gravure printing method, stamping, dispensing, a squeegee printing method, a silk screen printing method, and brush coating.

The paint may be applied only once or may be repeatedly applied a plurality of times, and from the viewpoint of producing an electron excitation layer (1) that can exhibit a sufficient electron emission capability, the paint is preferably repeatedly applied a plurality of times (for example, from 2 to 20 times, preferably from 5 to 15 times) to form a coating film having an appropriate thickness.

The coating film has a thickness of, for example, from 1 nm to 100 µm, and can be appropriately selected according to the desired function. For example, when a laminate excelling in Faradaic efficiency for CO production is desired, the lower limit of the coating film thickness is preferably 3 nm or greater, more preferably 10 nm or greater, particularly preferably 30 nm or greater, most preferably 50 nm or greater, and especially preferably 70 nm. Moreover, the upper limit of the coating film thickness is preferably 10 µm, particularly preferably 1 µm, and most preferably 100 nm. When a laminate having a high total reduction current density is desired, the lower limit of the coating film thickness is preferably 3 nm or greater, and particularly preferably 5 nm or greater. Moreover, the upper limit of the coating film thickness is preferably 10 µm, particularly preferably 1 µm, and most preferably 100 nm.

When the paint is to be repeatedly applied a plurality of times, from the viewpoint of being able to easily produce a coating film having excellent surface uniformity, a method is preferably adopted in which, for example, a below-described Step I is carried out once, after which a below-described Step II is carried out at least once.

Step I: applying, onto a substrate having a positive or negative charge, a paint containing diamond particles having a positive or negative charge, of which the charge is opposite the charge of the substrate, to fix the diamond particles on the substrate.

Step II: applying, onto the fixed diamond particles, a paint containing diamond particles having a positive or negative charge, of which the charge is opposite the charge of the fixed diamond particles, to laminate the diamond particles having the opposite charge onto the fixed diamond particles.

In Step I, when the paint containing diamond particles having a charge opposite the charge of the substrate is applied onto the substrate, the diamond particles in the paint migrate towards the substrate due to Coulomb force. When the diamond particles approach the substrate, van der Waals force is added to the Coulomb force, and the diamond particles are adsorbed and fixed on the substrate.

In Step II, the diamond particles in the aqueous dispersion migrate toward the fixed diamond particles due to the Coulomb force, and when the diamond particles approach each other, the diamond particles are adsorbed and fixed due to the addition of the van der Waals force to the Coulomb force.

When the zeta potential of the fixed diamond particles and the zeta potential of the diamond particles having a charge opposite the charge of the fixed diamond particles have a large amplitude, a large Coulomb force and a large van der Waals force are generated, and thus the diamond particle layer can be uniformly laminated with high density. Therefore, such a large amplitude is preferable.

The amplitude is represented by the sum of the absolute value of the zeta potential of the fixed diamond particles and the absolute value of the zeta potential of the diamond particles having a charge opposite the charge of the fixed diamond particles, and is, for example, 40 mV or greater, preferably 50 mV or greater, more preferably 60 mV or greater, particularly preferably 65 mV or greater, most preferably 70 mV or greater, and especially preferably 80 mV or greater. The upper limit of the sum of the absolute values of the zeta potentials is, for example, 120 mV.

Through this Step 1, a substrate having nitrogen-containing diamond particles fixed on the surface is obtained.

### Step 2

Step 2 is a step of forming, through a vapor phase growth method, a boron-doped diamond crystal structure (i.e., a grown film having a boron-doped diamond crystal structure) on the surface of the substrate having the nitrogen-containing diamond particles. The substrate is obtained through Step 1 and has the nitrogen-containing diamond particles fixed on the surface thereof.

Examples of the vapor phase growth method (CVD method) include a microwave plasma CVD method, a plasma CVD method, a hot-filament CVD method, and an optical CVD method. Among these, the microwave plasma CVD method is preferable in that a diamond crystal structure having excellent crystallinity can be rapidly formed.

The microwave plasma CVD method is a method for growing a boron-doped diamond crystal structure by guiding microwaves into a plasma generation chamber to decompose a carbon source and a boron source and generate plasmas, and then guiding the plasma onto a substrate heated to a temperature from 300 to 900°C. The boron atom content in the resulting diamond crystal structure can be controlled by adjusting the blending amount of the boron source added to the carbon source.

Examples of the carbon source include hydrocarbons such as methane, ethane, propane, ethylene, and acetylene; alcohols such as methanol and ethanol; and ketones such as acetone. One type of carbon source can be used alone, or two or more types thereof can be used in combination.

As the boron source, for example, diborane, trimethylboron, trimethoxyborane, and boron oxide can be used.

Through this Step 2, a substrate/electron excitation layer (1)/conductive layer (2) laminate is obtained.

### Step 3

Step 3 is a step of removing the substrate from the substrate/electron excitation layer (1)/conductive layer (2) laminate obtained through Step 2.

The method for removing the substrate can be appropriately selected according to the type of substrate. For example, when a silicon substrate is used as the substrate, a method of dissolving and removing the substrate using a mixed solution of hydrofluoric acid and nitric acid can be selected.

Through this Step 3, an electron excitation layer (1)/conductive layer (2) laminate is obtained.

### Step 4

Step 4 is a step of hydrogenating the surface, exposed by removing the substrate, of the electron excitation layer (1)/conductive layer (2) laminate obtained through step 3, that is, the surface on the electron excitation layer (1) side.

The surface of the electron excitation layer (1) can be hydrogenated by, for example, a hydrogen-plasma treatment.

Through this Step 4, a hydrogen-terminated electron excitation layer (1)/conductive layer (2) laminate is obtained. Moreover, in a case in which the surface of the electron excitation layer (1) side is subjected to the hydrogen-plasma treatment, sp2 carbons contained in the electron excitation layer (1) can be removed at the same time as the hydrogen termination.

The method for producing the laminate may also include a production method through the following steps.
Step 1': forming, through a vapor phase growth method, a boron-doped diamond crystal structure on a substrate
Step 2': fixing nitrogen-containing diamond particles on the boron-doped diamond crystal structure.

The following steps may also be provided after Step 2'.
Step 3: removing the substrate
Step 4: subjecting the surface exposed by removing the substrate to a hydrogenation treatment

Step 1' can be carried out in the same manner as Step 2 described above with the exception that instead of forming the boron-doped diamond crystal structure on the substrate having nitrogen-containing diamond particles fixed to the surface, the boron-doped diamond crystal structure is formed on a substrate having seed crystals (e.g., diamond particles not containing nitrogen) fixed to the surface thereof.

Step 2' can be carried out in the same manner as Step 1 described above with the exception that instead of applying the paint containing nitrogen-containing diamond particles onto the substrate, the paint containing nitrogen-containing diamond particles is applied onto the boron-doped diamond crystal structure obtained in step 1'.

Since the laminate produced by the above method uses the nitrogen-containing diamond particles, the nitrogen atom concentration can be increased without damaging the diamond crystal structure of the electron excitation layer (1), and the laminate has both an electron emission capability stemming from the diamond crystal structure and good visible light responsiveness. When the laminate is irradiated with visible light, electrons are emitted, and an electrode reaction field having an excellent reducing property is formed. Since the laminate has the above-described characteristics, it can be suitably used as a low environmental load-type electrode (preferably, a reduction electrode) that uses sunlight.

### Electrode

An electrode according to an embodiment of the present disclosure includes the laminate. The electrode may be configured from only the laminate, or may be provided with another configuration. For example, the laminate may be laminated on a known substrate.

The electrode emits electrons by irradiation with visible light, and thereby forms a reaction field with an excellent reducing property. Therefore, the electrode is preferably a reduction electrode, particularly preferably a visible light-responsive reduction electrode, and most preferably a reduction electrode for photovoltaic power generation.

### Electrolytic Reaction Apparatus and Method for Producing Carbon Monoxide Using Same

An electrolytic reaction apparatus according to an embodiment of the present disclosure is provided with the above-described electrode (for example, a reduction electrode) or the above-described laminate. The electrolytic reaction apparatus may further include an oxidation electrode, a separator, an electrolytic cell, a power supply, and the like.

The electrolytic reaction apparatus is preferably a reduction reaction apparatus.

The electrode included in the electrolytic reaction apparatus has a function of emitting electrons (more specifically, solvated electrons) when irradiated with sunlight. Therefore, when the electrolytic reaction apparatus is used, an electrolytic reaction can be carried out using sunlight, and energy saving is achieved. When CO₂ is reduced using the electrolytic reaction apparatus, CO can be selectively and efficiently produced. The carbon monoxide thus produced can be used as a raw material for various chemical products.

When CO₂ is reduced by the method described in the Examples under visible light irradiation using the electrolytic reaction apparatus, the amount of CO produced is, for example, 0.01 mol/m²·hr or greater, preferably 0.05 mol/m²·hr or greater, more preferably 0.1 mol/m²·hr or greater, and particularly preferably 0.15 mol/m²·hr or greater.

Each of the configurations, their combinations, and the like of the present disclosure above is an example, and addition, omission, substitution, and change of the configuration can be appropriately made without departing from the gist of the present disclosure.

### Examples

Hereinafter, the present disclosure will be described more specifically with reference to examples, but the present disclosure is not limited by these examples, and is limited only by the claims.

### Example 1 (Production of BDD/NDD Laminate)

### Formation of Electron Excitation Layer (1)

A SiO₂/Si substrate was used as a substrate. The SiO₂/Si substrate was a laminate of SiO₂ (100 nm thick) and n-type Si (0.45 mm thick), and the diameter was 8 mm.

The SiO₂/Si substrate was subjected to an ultrasonic cleaning treatment with acetone, ethanol, and pure water and to an acid wash treatment.

A suspension of nitrogen-containing nanodiamond particles (N-nD, particle size D50: 5 nm, trade name "DINNOVARE", available from Daicel Corporation) (concentration of N-nD particles: 1.0%, solvent: water) was applied onto the treated SiO₂/Si substrate, and dried to form a N-nD particle film having a monolayer structure. As a result, a N-nD particle film/SiO₂/Si substrate laminate was obtained.

The N-nD particle film surface of the obtained N-nD particle film/SiO₂/Si substrate laminate was subjected to a hydrogen-plasma treatment (1) (900 W, 50 kPa, substrate temperature: 890°C, hydrogen flow rate: 100 sccm) for an arbitrary period of time within 1 hour to remove sp2 carbons of the N-nD particle film.

### Formation of Conductive Layer (2)

Subsequently, boron-doped nanodiamonds (BDD) were grown under the following conditions on the N-nD particle film of the N-nD particle film/SiO₂/Si substrate laminate using a 2.45 GHz microwave plasma chemical vapor deposition apparatus (available from Arios Inc.) having a spherical resonator structure. As a result, a BDD/NDD/SiO₂/Si substrate laminate was obtained.

### CVD Conditions

Plasma output: 900 W
Reaction pressure: 50 kPa
Substrate temperature: 890°C
Hydrogen flow rate: 100 sccm
Carbon source: methane (flow rate: 2 sccm)
Boron source: hydrogen-diluted 1% trimethylboron (flow rate: 1 sccm)
Growth time: 80 h

Subsequently, the SiO₂/Si substrate was completely dissolved and removed from the BDD/NDD/SiO₂/Si substrate laminate using a mixed solution of hydrofluoric acid and nitric acid (pure water : HF stock solution : nitric acid = 20 g/20 g/20 g), and an NDD/BDD laminate was obtained. The obtained NDD/BDD laminate had a film thickness of 0.15 mm and was self-supporting.

Subsequently, the NDD-side surface of the NDD/BDD laminate was subjected to a hydrogen-plasma treatment (2) (650 W, 40 kPa, 5 minutes, substrate temperature 850°C, hydrogen flow rate 100 sccm) to carry out hydrogen termination and remove sp2 carbons.

Through the above treatment, a hydrogen-terminated NDD/BDD laminate (1) was obtained.

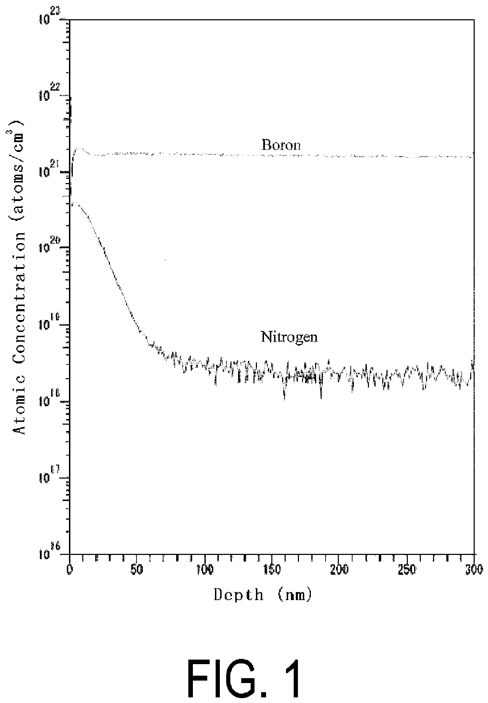

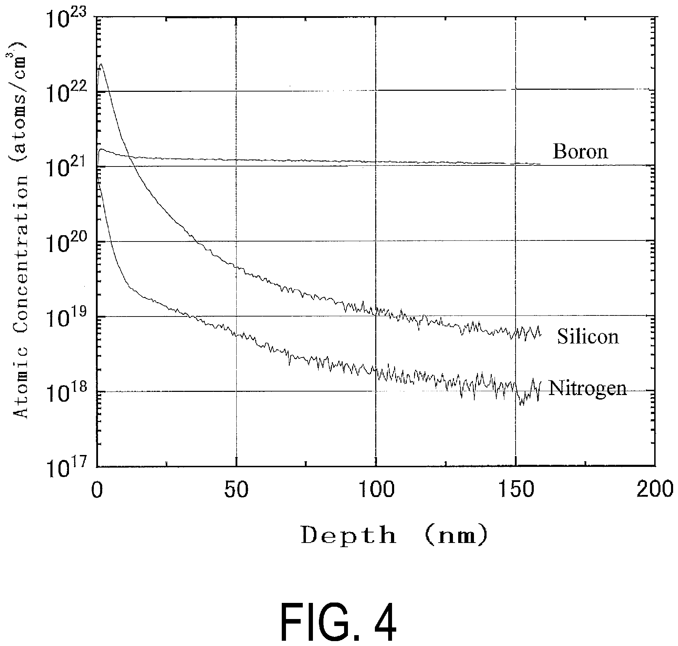

In addition, the concentrations of nitrogen atoms and boron atoms in the laminate (1) were measured by secondary ion mass spectrometry under the following conditions. The results are presented in FIGS. 1 and 4.

### Secondary Ion Mass Spectrometry Conditions

Apparatus: PHI ADEPT-1010TM (available from ULVAC-PHI, Inc.)
Measurement conditions: primary accelerating voltage of 5.0 kV
Detection area: 54 × 54 µm²
Primary ion species: Cs⁺

### Evaluation of CO₂ Reduction Capability

The CO₂ reduction capability was measured by the following method using the laminate (1) as a diamond electrode.

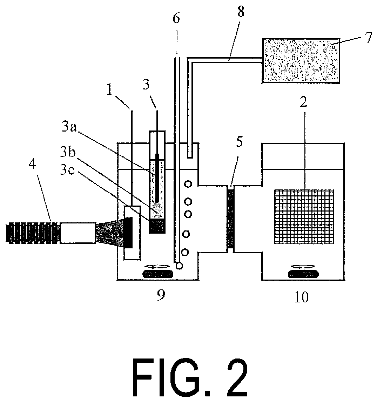

As illustrated in FIG. 2, the laminate (1) (the surface area in contact with the electrolytic solution was 0.2 cm²) was used as a working electrode 1, and a platinum mesh electrode was used as a counter electrode 2. A silver/silver chloride (Ag/AgCl) electrode 3a immersed in a saturated potassium chloride aqueous solution 3b in a glass tube having a porous glass liquid junction 3c was used as a reference electrode 3.

One side of an H-type cell (available from EC Frontier Co., Ltd.) was used as a cathode chamber 9, and the other side was used as an anode chamber 10. The working electrode 1 and the reference electrode 3 were installed in the cathode chamber 9, and the counter electrode 2 was installed in the anode chamber 10. The two chambers were separated by a diaphragm 5 (Nafion 117), and then 30 mL of a 0.1 M potassium chloride aqueous solution were added as an electrolytic solution to each chamber.

The H-type cell was then sealed, after which CO₂ gas was bubbled through an introduction port 6 at a flow rate of 80 mL/min for 30 minutes and released from a gas discharge port 8 to deaerate the electrolytic solution, and CO₂ was dissolved to a saturated concentration. While the CO₂ gas flow rate was maintained at 80 mL/min, a sample bag 7 (Smart Bag PA, CEK-1, available from GL Sciences Inc.) was attached, and application of a constant potential of -2.0 V (vs. Ag/AgCl) to the working electrode 1 was immediately started using an electrochemical measurement system (HSV-110, available from Hokuto Denko Corporation). In a case in which light irradiation was to be carried out, at the same time when the constant potential was applied, light emitted from a mercury-xenon light source (not illustrated, L9588-04, available from Hamamatsu Photonics K.K.) was passed through an optical filter (not illustrated, A9616-09, available from Hamamatsu Photonics K.K.) to cut the ultraviolet light such that only visible light was introduced into a quartz optical fiber (A10014-70-0110, available from Hamamatsu Photonics K.K.). The visible light emitted from a fiber end 4 was irradiated toward the surface of the working electrode 1 (surface of the electron excitation layer (1) side). The flow of CO₂, application of the constant potential, and light irradiation were continued for 15 minutes and then stopped at the same time. Subsequently, a quantitative analysis of components contained in the mixed gas collected in the sample bag 7 and the electrolytic solution in the cathode chamber 9 was carried out, and the production amount of CO was calculated. The result is presented in the following table.

### Evaluation of Electron Emission Efficiency

The electron emission efficiency of the laminate (1) in response to irradiation with visible light was measured by the following method.

That is, a gold foil was disposed on an insulating base in a measurement chamber (available from Riko International Ltd., i-Series ultra-high vacuum microprobe and chamber, vacuum degree of 10⁻⁴ Pa or less, measurement temperature of 23 to 40°C), and the laminate (1) was disposed thereon and oriented such that the BDD side was in contact with the gold foil.

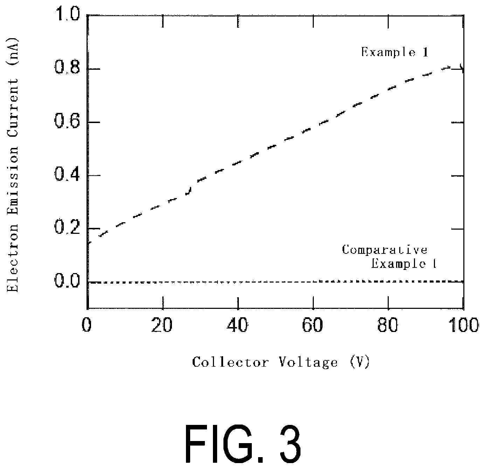

A voltage of -20 V was then applied to the back surface of the laminate (1) using a semiconductor parameter analyzer (Keithley Semiconductor Characterization System 4200-SCS), a collector voltage (0 to 100 V) was applied at a position of 100 µm above the front surface of the laminate (1), and the laminate (1) was then irradiated with visible light from a position 35 mm away from the laminate (1) in the same manner as in the evaluation of the CO₂ reduction capability, and the amount of generated current was measured. The results are shown in FIG. 3.

### Comparative Example 1

The CO₂ reduction capability and the electron emission efficiency were evaluated in the same manner as in Example 1 with the exception that a boron-doped diamond film (BDD) was used as the diamond electrode instead of the BDD/NDD laminate. The results are presented in the following table and FIG. 3.

### [Table 1]

**Table 1**

| | Example 1 NDD/BDD | | Comparative Example 1 BDD |
|---|---|---|---|
| Nitrogen atom concentration atom in layer (1) [atoms/cm³] | 4×10²⁰ | | 0 |
| Layer (1) thickness [nm] | 70 | | 0 |
| Boron atom concentration in layer (2) [atoms/cm³] | 2×10²¹ | | 2×10²¹ |
| Layer (2) thickness [µm] | 150 | | 1 |
| Visible light irradiation | Yes | No | No |
| CO production amount [mol/m²hr] | 0.17 | 0.09 | 0.01 |

### Example 2

A hydrogen-terminated NDD/BDD laminate was obtained in the same manner as in Example 1 with the exception that the thickness of the conductive layer (2) was changed.

### Example 3

A hydrogen-terminated NDD/BDD laminate was obtained in the same manner as in Example 1 with the exception that the nitrogen atom concentration and the boron atom concentration were changed as described in the following table, and the hydrogen-plasma treatment (1) was not implemented.

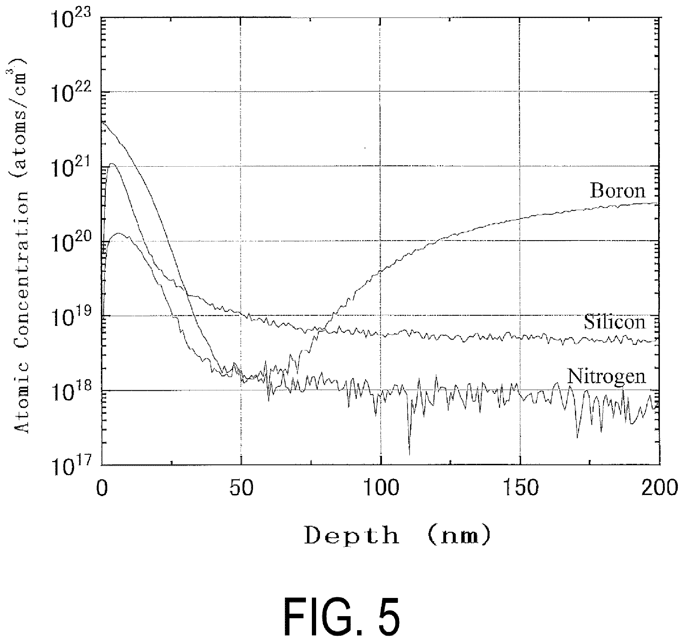

In addition, the concentrations of nitrogen atoms and boron atoms in the obtained laminate were measured by secondary ion mass spectrometry under the following conditions. The results are shown in FIG. 5.

### Example 4

### Formation of Electron Excitation Layer (1)

A SiO₂/Si substrate was used as a substrate. The SiO₂/Si substrate was a laminate of SiO₂ (100 nm thick) and n-type Si (0.45 mm thick), and the diameter was 8 mm.

The SiO₂/Si substrate was subjected to an ultrasonic cleaning treatment with acetone, ethanol, and pure water and to an acid wash treatment.

A suspension of nitrogen-containing ζ+ nanodiamond particles (particle size D50: 5 nm) (concentration of N-ζ+nD particles: 1.0%, solvent: water, zeta potential: +50 mV) was applied to the SiO₂/Si substrate treated in the same manner as in Example 1, after which the substrate surface was thoroughly washed with pure water, and water remaining on the surface was removed by air blowing. Subsequently, a suspension of nitrogen-containing ζ- nanodiamond particles (particle size D50: 5 nm) (concentration of N-ζ-nD particles: 1.0%, solvent: water, zeta potential: -40 mV) was applied at room temperature onto the treated SiO₂/Si substrate, after which the substrate surface was thoroughly washed with pure water, and water remaining on the surface was removed by air blowing.

The process of immersing in the suspension of nitrogen-containing ζ+ nanodiamond particles, drying, immersing in the suspension of nitrogen-containing ζ-nanodiamond particles, and drying was further repeated four times to form ten nitrogen-containing nanodiamond particle layers. As a result, a N-nD particle film/SiO₂/Si substrate laminate was obtained.

### Formation of Conductive Layer (2)

A BDD/NDD/SiO₂/Si substrate laminate was obtained in the same manner as in Example 1 with the exception that the boron and nitrogen atom concentrations were changed as described in the following table, and the hydrogen-plasma treatment (1) was not carried out.

Subsequently, the SiO₂/Si substrate was completely dissolved and removed from the BDD/NDD/SiO₂/Si substrate laminate in the same manner as in Example 1, and a hydrogen-terminated NDD/BDD laminate was obtained.

### Examples 5 to 7

### Formation of Electron Excitation Layer (1)

An N-nD particle film/SiO₂/Si substrate laminate was obtained in the same manner as in Example 4 with the exception that the number of repetitions of the process of immersing in the suspension of nitrogen-containing ζ+ nanodiamond particles, drying, immersing in the suspension of nitrogen-containing ζ- nanodiamond particles, and drying was changed.

### Formation of Conductive Layer (2)

A BDD/NDD/SiO₂/Si substrate laminate was obtained in the same manner as in Example 1 with the exception that the boron atom concentration and the thickness of the layer (2) were changed as described in the following table, and the hydrogen-plasma treatment (1) was not carried out.

Subsequently, the SiO₂/Si substrate was completely dissolved and removed from the BDD/NDD/SiO₂/Si substrate laminate in the same manner as in Example 1, and a hydrogen-terminated NDD/BDD laminate was obtained.

The CO₂ reduction capability and electron emission efficiency of each of the laminates obtained in the Examples and the Comparative Example were evaluated in the same manner as in Example 1.

In addition, the laminates obtained in the Examples and the Comparative Example were used as electrodes, and the electron emission amount, the total reduction current density, and the Faradaic efficiency for CO production (CO-F efficiency) were measured by the following methods.

### Measurement Method of Electron Emission Amount

The amount of current generated was measured by the same apparatus and method as in the evaluation of electron emission efficiency with the exception that the collector voltage was fixed to 0 V

### Measurement Method of Total Reduction Current Density

The total reduction current density was calculated by recording changes in the reduction current when a constant potential was applied for 15 minutes with the same apparatus and under the same conditions as in the evaluation of the CO₂ reduction capability, and then dividing an average value thereof by the electrode surface area.

### Measurement Method of CO-F Efficiency

A change in the reduction current value when a constant potential was applied for 15 minutes with the same apparatus and under the same conditions as in the evaluation of the CO₂ reduction capability was recorded, and the total amount of electricity resulting from the reduction reaction was calculated. In addition, the amount of electricity used for CO production was calculated from the amount of CO produced, the ratio of the amount of electricity used for CO production to the total amount of electricity in the reduction reaction was expressed as a percentage and defined as the CO-F efficiency.

The results are summarized and presented in the following table.

### [Table 2]

**Table 2**

| | Layer (1) | | | Layer (2) | | Electron emission current | Total reduction current density [mA/cm²] | | CO production amount [mol/m² hr] | | CO-F efficiency I%] | |
|---|---|---|---|---|---|---|---|---|---|---|---|---|
| | N concentration atoms/cm³ | Lamination method | Thickness nm | B concentration atoms/cm³ | Thickness µm | pA | Visible light irradiation | No visible light irradiation | Visible light irradiation | No visible light irradiation | Visible light irradiation | No visible light irradiation |
| Example 1 | 4×10²⁰ | Applied once | 70 | 2×10²¹ | 150 | 0.6 | 4.579 | 2.341 | 0.17 | 0.09 | 20 | 21 |
| Example 2 | >4×10²⁰ | Applied once | 70 | 2×10²¹ | 140 | 48 | 2.401 | 1.979 | 0.183 | 0.171 | 41 | 47 |
| Example 3 | 4×10²¹ | Applied once | 43 | 3×10²⁰ | 140 | Not measured | 0.474 | 0.001 | 0.02 | ND | 23 | ND |
| Example 4 | 2×10²¹ | Applied 10 times | 37 | 7×10²⁰ | 180 | 100 | 0.61 | 0.21 | 0.022 | 0.003 | 19 | 8 |
| Example 5 | 2×10²¹ | Applied 5 times | 14 | 7×10²⁰ | 154 | 3.4 | 0.265 | 0.024 | 0.08 | ND | 15 | ND |
| Example 6 | 2×10²¹ | Applied 3 times | Unmeasurable | 7×10²⁰ | 148 | ND | 2.577 | 0.83 | ND | ND | ND | ND |
| Example 7 | 4×10²¹ | Applied 20 times | 56 | 5×10²⁰ | 157 | 479 | 0.386 | 0.014 | 0.012 | ND | 17 | ND |
| Comparative Example 1 | 0 | - | 0 | 2×10²¹ | 1 | ND | ND | ND | ND | 0.01 | ND | ND |

As a summary of the above, configurations and variations of the present disclosure are described below.
[1] A laminate including: an electron excitation layer (1) having a diamond crystal structure in which some carbon atoms are substituted with nitrogen atoms; and a conductive layer (2) having a diamond crystal structure in which some carbon atoms are substituted with boron atoms.
[2] The laminate according to [1], wherein the nitrogen atom concentration in the layer (1) is 5 × 10¹⁸ atoms/cm³ or greater.
[3] The laminate according to [1] or [2], wherein the boron atom concentration in the layer (2) is 1 × 10¹⁹ atoms/cm³ or greater.
[4] The laminate according to [1], wherein the nitrogen atom concentration in the layer (1) is 5 × 10¹⁸ atoms/cm³ or greater, and the boron atom concentration in the layer (2) is 1 × 10¹³ atoms/cm³ or greater.
[5] The laminate according to any one of [1] to [4], wherein the thickness of the layer (1) is from 1 nm to 100 µm.
[6] The laminate according to any one of [1] to [5], wherein the thickness of the layer (2) is 1 µm or greater.
[7] The laminate according to any one of [1] to [4], wherein the thickness of the layer (1) is from 1 nm to 100 µm, and the thickness of the layer (2) is 1 µm or greater.
[8] The laminate according to any one of [1] to [7], wherein the nitrogen atom concentration in a portion from the surface of the layer (1) to a depth of 30 nm is 1 × 10¹⁹ atoms/cm³ or greater.
[9] A method for producing a laminate, the method including laminating an electron excitation layer (1) having a diamond crystal structure in which some carbon atoms are substituted with nitrogen atoms, and a conductive layer (2) having a diamond crystal structure in which some carbon atoms are substituted with boron atoms, to obtain the laminate described in any one of [1] to [8].
[10] An electrode including the laminate described in any one of [1] to [8].
[11] The electrode according to [10], wherein the electrode is a visible light-responsive reduction electrode.
[12] A visible light-responsive reduction electrode including the laminate described in any one of [1] to [8].
[13] An electrolytic reaction apparatus provided with the electrode described in any one of [10] to [12].
[14] A reduction reaction apparatus provided with the electrode described in any one of [10] to [12].
[15] A method for producing carbon monoxide, the method including reducing, under irradiation with visible light, carbon dioxide on the electrode described in any one of [10] to [12] to obtain carbon monoxide.
[16] Use of the laminate described in any one of [1] to [8] as an electrode.
[17] Use of the laminate described in any one of [1] to [8] as a visible light-responsive reduction electrode.
[18] A method for producing an electrolytic reaction apparatus, the method including installing, as an electrode, the laminate described in any one of [1] to [8] to produce an electrolytic reaction apparatus.
[19] A method for producing a reduction reaction apparatus, the method including installing, as a reduction electrode, the laminate described in any one of [1] to [8] to produce a reduction reaction apparatus.

### Industrial Applicability

In the photo-electrochemical field, the diamond laminate of the present invention is suitable as a material of a low environmental load-type reduction electrode that uses sunlight as the energy required for a reduction reaction, or as a material of a visible light-responsive reduction electrode.

### Reference Signs List

1 Working electrode
2 Counter electrode
3 Reference electrode
3a Ag/AgCl electrode
3b Saturated potassium chloride aqueous solution
3c Porous glass liquid junction
4 Fiber end
5 Diaphragm
6 CO₂ gas introduction port
7 Sample bag
8 Gas discharge port
9 Cathode chamber
10 Anode chamber

## Claims

1. A laminate comprising:
an electron excitation layer (1) having a diamond crystal structure in which some carbon atoms are substituted with nitrogen atoms; and
a conductive layer (2) having a diamond crystal structure in which some carbon atoms are substituted with boron atoms.

2. The laminate according to claim 1, wherein a nitrogen atom concentration in the layer (1) is 5 × 10¹⁸ atoms/cm³ or greater, and a boron atom concentration in the layer (2) is 1 × 10¹⁹ atoms/cm³ or greater.

3. The laminate according to claim 1 or 2, wherein the layer (1) has a thickness from 1 nm to 100 µm, and the layer (2) has a thickness of 1 µm or greater.

4. A method for producing a laminate, the method comprising laminating an electron excitation layer (1) having a diamond crystal structure in which some carbon atoms are substituted with nitrogen atoms, and a conductive layer (2) having a diamond crystal structure in which some carbon atoms are substituted with boron atoms, to obtain the laminate described in claim 1 or 2.

5. An electrode comprising the laminate described in claim 1 or 2.

6. The electrode according to claim 5, wherein the electrode is a visible light-responsive reduction electrode.

7. An electrolytic reaction apparatus comprising the electrode described in claim 5.

8. A method for producing carbon monoxide, the method comprising reducing, under irradiation with visible light, carbon dioxide on the electrode described in claim 5 to obtain carbon monoxide.
